# EUROPEAN PATENT APPLICATION

(11) **EP 1 710 607 A2**
(43) Date of publication of application: **11.10.2006**
(21) Application number: 06300330.5
(22) Date of filing: 05.04.2006
(51) Int. Cl.: G02B 6/44

(54) **A limited combustible optical fiber**

(30) Priority: 08.04.2005 US 102591
(71) Applicant: Nexans, 75008 Paris (FR)
(72) Inventor: Letch, Lawrence, Lititz, PA 17543 (US); Rosko, Jack, Apex,, NC 27502 (US)
(74) Representative: Feray, Valérie

(57) **Abstract**

A limited combustible optical fiber includes a plurality of optical fibers (12) in a loose tube (14) or tight buffer arrangement. For example, a buffer tube jacket is made of a flame retardant material. A strengthening member (16) made of aromatic polyamide fiber surrounds the buffer tube jacket. An outer layer jacket (18) surrounds the strengthening member, wherein the buffer tube jacket and the outer layer jacket are formed by a composition including a fluoropolymeric base polymer and a nanoclay additive, such that the limited combustible fiber passes NFPA 255/NFPA 259 testing requirements.

## Description

### Field Of The Invention

This invention relates to plenum cables and more specifically to limited combustible fiber optic cables.

### Background Of The Invention

Safety experts have been historically concerned about cables that are installed in ducts, plenums, ceiling cavity plenums and raised floor plenums. Typically air throughout a building is circulated through plenums. As such the flame and smoke characteristics of all materials employed within such plenums are crucial.

One example of determining cable performance is based on a method established by Underwriter Laboratories commonly known as the Steiner Tunnel test and referenced as NFPA 262.

However, in response to a rapid growth in telecommunication needs, there has been a substantial accumulation of cabling in airflow spaces within buildings. As a result, Underwriters Laboratory (UL) has developed an Outline of Understanding subject 2424 for cable products that comply with the surface burning and heat release requirements for Limited Combustible material for use in ceiling cavity and raised floor plenums in accordance with the 2002 edition of NFPA 90A. These cables also comply with Articles 725, 760, 770, 800, 820 and 830 of the National Electrical Code.

The 1999 Standard for the Installation of Air Conditioning and Ventilating Systems (NFPA 90A) requires that all materials exposed to air flow shall be noncombustible or limited combustible with a maximum smoke developed index of 50 when tested in accordance with NFPA 255, which is a Standard Method of Test of Surface Burning Characteristics of Building Materials.

An exception to this requirement permits wire and cable to be installed in these spaces if they meet specific flame propagation and smoke optical density limits when tested in accordance with NFPA 262, which is the Standard Method of Test for Flame Travel and Smoke of Wires and Cables for Use in Air-Handling Spaces. The exception characteristics include a requirement for a maximum 5ft flame spread, a peak optical density limit of 0.5 and average optical density limit of 0.15.

However, a separate Standard NFPA 13-02 for Installation of Sprinkler Systems, requires that plenum areas may be used without sprinkler protection when they are either Non-combustible or Limited Combustible. The Standard requires that concealed spaces such as plenums containing exposed combustibles shall be protected using a low hazard sprinkler system with specific sprinkler positioning.

Hence in order to satisfy more stringent flame resistance requirements and in order to avoid additional sprinkler installations, there is a need for Limited Combustible fiber optic cables that meet or exceed NFPA 255/NFPA 259 requirements as stated above.

### Summary Of The Invention

In accordance with one embodiment of the present invention a limited combustible fiber optic cable is provided that includes a plurality of optical fibers in a loose tube arrangement, wherein one or more loose tubes are defined by an outer coating made of a low smoke, flame retardant thermoplastic. The tubes are then covered with an overall tube sheath made of a thermoplastic material. An outer layer jacket, which is also made of a low smoke, flame retardant thermoplastic is disposed over the tube sheath. The space between the outer layer jacket and the tube sheath is filled with a strengthening material that exhibits a low smoke flame retardant characteristics.

In accordance with one embodiment of the invention, the tubing material and the outer layer jacket material is made of a flame retardant, fluoropolymeric insulative composition comprising a fluoropolymeric base polymer and a nonoclay additive. The fluoropolymeric base polymer is selected from a group consisting of compounds of polytetrafluoroethylene (PTFE) fluoroc arbons, fluroinated ethylene/propylene (FEP) fluorocarbons, perfuluoroalkoxy (PFA) flurocarbons, ethylene tetraflyoroethylene (ETFE) floropolymers, polyvinylidene (PVDF) fluoropolymers, ethylene cholrotrifluoroethylene (ECTFE) fluoropolymers, and fluoro-chlorinated homopolymers, copolymers, and terpolymers. The nonoclay additive is selected from a group consisting of synthetic silicate montmorillonites, natural layered silicate montmorillonites and a layered alumna-silicate. The strengthening material in accordance with one embodiment of the invention is made of an aromatic polyamide material. An exemplary material to be used as strengthening material is Kevlar or Twaron.

Other strengthening materials in accordance with other embodiments of the invention include ceramic and refractory fibers, such as alumina, glass fibers with preferred soda content, such as S-glass fibers, and organic carbon based fibers, or fibers made by combinations of strength member fibers made from differing materials.

An optical fiber cable made in accordance with the above described materials passes the NFPA 255 and NFPA 259 requirements as a limited combustible cable.

### Brief Description Of The Drawings

Figure 1A is a cross section of an optical fiber cable in accordance with one embodiment of the invention.
Figure 1B is a cross section of an optical fiber cable in accordance with another embodiment of the invention.
Figure 2 is a side view of an optical fiber cable in accordance with one embodiment of the invention.

### Detailed Description of the Drawings

Figure 1A illustrates a cross section of an optical fiber cable 10 in accordance with one embodiment of the invention. As illustrated a plurality of optical fibers 12 are placed within a tube 14. Strengthening members 16 surround the tube to provide protection from incidental longitudinal deformation. An outer layer jacket 18 surrounds the entire cable assembly.

In accordance with one embodiment of the invention, fibers 12 are step index single-mode or graded index multimode fiber with protective UV cured acrylate coating. The coating diameter cf the fibers is about 245 +/- 10 µm

Loose tube 14 includes a buffer jacket material that exhibits low smoke, flame retardant characteristics. The outer diameter of the tube buffer jacket is about 3 mm and color coded based on different fiber characteristics. Typically the tube buffer jacket is painted by ultra violet UV cured colorants.

In accordance with one embodiment of the invention, the tube buffer jacket is made of a non-dripping flame retardant fluroelastomer insulative composition in accordance with United States Patent 6,797,760 incorporated herein by reference. An exemplary composition for such a tube buffer jacket may be acquired from AlphaGary Corporation, Leominster, MA (USA) under the brand name Smokeguard FP108 More specifically, the tube buffer jacket includes a fluoropolymeric base polymer and a nanoclay additive, wherein the composition has a limiting oxygen index in the range of 45.5% to 62%.

Furthermore, the fluoropolymeric base polymer is selected from the group consisting of polytetrafluoroethylene (PTFE) fluorocarbons, fluorinated ethylene/propylene (FEP) fluorocarbons, perfluoroalkoxy (PFA) fluorocarbons, ethylene tetrafluoroethylene (ETFE) fluoropolymers, polyvinylidene (PVDF) fluoropolymers, ethylene chlorotrifluoroethylene (ECTFE) fluoropolymers, and fluoro-chlorinated homopolymers, copolymers and terpolymers.

In addition to the materials described above, in accordance with one embodiment of the invention, the tube buffer jacket also includes an olefinic polymer selected from the group consisting of very low density polyethylene (VLDPE), low density polyethylene (LDPE), linear low density polyethylene (LLDPE), high density polyethylene (HDPE), polypropylene (PP), and ethylene propylene rubber (EPR).

In accordance with another embodiment of the invention, the olefinic polymer is selected from a group consisting of ethylene-based homopolymers, copolymers and terpolymers.

In accordance with yet another embodiment of the invention, at least one of the olefinic polymers is crosslinked, for example using an organic peroxide.

In accordance with yet another embodiment of the invention, the buffer jacket material also includes one of an acetate resin and an acrylate resin selected from the group consisting of ethyl vinyl acetate (EVA), ethylene ethyl acrylate (EEA), ethylene methyl acrylate (EMA), and ethylene butyl acrylate (EBA).

The composition in accordance with additional embodiment of the invention includes polyvinylchloride resin and an olefinic polymer; and one of an acetate resin and an acrylate resin.

Finally, the nanoclay additive is selected from the group consisting of synthetic silicate montmorillonites, natural layered silicate montmorillonites and a layered alumna-silicate. In accordance with one embodiment of the invention, the individual platelets of the nanoclay additive are approximately 1 micron in diameter, and are chemically modified to increase hydrophobicity.

The composition may also include a filler selected from the group consisting of metal hydrates, oxides, carbonates, talcs, clays, molybdates, borates, stannates, carbon blacks, silicates, and phosphates. Other additives such as a substance selected from the group consisting of an antioxidant, a pigment, and a lubricant may also be included.

In accordance with another embodiment of the invention, the tube buffer jacket is made of a thermoplastic, non-elastomeric, multi-phase polymer blend as disclosed in the United States Patent number 6,743,865 and incorporated herein by reference. Such a material is available from Atofina Chemicals, Inc..

The tube buffer jacket composition in accordance with this embodiment of the invention comprises a vinylidene fluoride based copolymer and at least one other polymer selected from the group consisting of polyvinylidene fluroide homopolymer and a vinylidene fluoride-based copolymer. Furthermore, the material may include a heterogeneous vinylidene fluoride based copolymer.

The strengthening member 16 in accordance with one embodiment of the invention is made of an aromatic polyamide material. An exemplary material to be used as strengthening material is aramid fiber available under the trade name Kevlar or Twaron. It is noted that although the use of aramid fiber is not expected to pass a flame resistance test, its use in accordance with the principles of the present invention has remarkably led to an optical fiber cable construction that passes the NFPA 255 limited combustible requirements, with a smoke index of less than 50.

Other strengthening materials in accordance with other embodiments of the invention include ceramic fibers, such as alumina that are stable to temperatures in excess of 2000°C. Again, the use of such material leads to a fiber optic cable with a smoke index of less than 50 in accordance with NFPA 255 testing requirements.

Still other strengthening materials in accordance with another embodiment of the invention includes glass fibers with appropriate soda content, such as those found in S-glass.

Furthermore, other strengthening materials in accordance with another embodiment of the invention includes organic carbon based fibers and Quartz fibers.

In accordance with another embodiment of the invention, the strengthening material is a composition of various materials described above. For example, a composition made of aramid and alumina Saffil is prepared to be employed as a strengthening material. Similarly, a composition made of alumina Saffil and Carbon fibers is prepared for the same purpose. Alternatively, a composition made of alumina Saffil and S-glass fibers is prepared.

Outer jacket layer 18 is also made of the same materials described above in reference with buffer tube jacket 14.

Optical fiber cable 10 is produced in accordance with extrusion techniques commonly known to those skilled in the art. In accordance with one embodiment of the invention, the operating temperature of the fiber is in a range of - 20 °C to +70 ° C. The fiber optic cable includes a minimum radius of about 9.9 cm during installation and 6.6 cm afterwards. It is also manufactured to be compliant with various TIA/EIA requirements such as FOTP-41, FoTP-25, FOTP-104 and TIA/EIA 568.B.3.

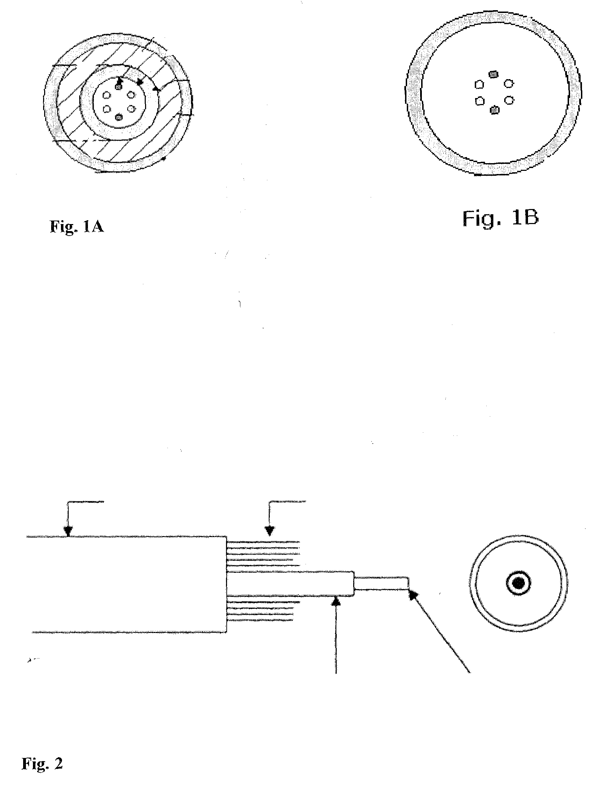

Furthermore, although the embodiments described above are mainly directed to loose tube optical fiber arrangements, the invention is not limited in scope in that respect. For example, tight buffer fibers, as well known by those skilled in the art, and shown in Figure 1B in accordance with other embodiments of the invention is also employed. Thus, instead of loose tube fibers 12 in Fig. 1A, tight buffer fibers 30 are employed.

### Examples

Table 1 illustrates the test results based on UL tests performed on various fiber optic cables intended to qualify as Limited Combustible.

**TABLE I**

| **Sample** | **Cable Dia. (in.)** | **Outer Jacket Tight or Loose** | **Number of Cable Lengths** | **Flame Spread Index 25)** | **Smoke Developed (< Index (< 50)** | **Heat of Comb. (btu/lb)** |
|---|---|---|---|---|---|---|
| **6 Fiber Optics unslit Loose Tube** Sample G1 | 0.223 | Loose | 90 | **5** | **90.0 (90.6)** | 1894 |
| **2 Fiber Optics unslit** Sample A **Loose Tube** | 0.225 | Loose | 90 | **0** | **45.0 (45.6)** | 1967 |
| **6 Fiber Optics unslit** Sample B **Loose Tube** | 0.225 | Loose | 90 | **0** | **40.0 (39.7)** | 1752 |
| **6 Fiber Optics unslit** Sample D **Loose Tube** | 0.225 | Loose | 90 | 0 | **35.0 (1) (35.9)** | 1807 |
| **2 Fiber Optics slit** Sample A **Loose Tube** (SLit) | 0.225 | Loose | 90 | 5 | **95.0 (95.9)** | |
| **6 Fiber Optics slit** Sample B **Loose Tube** (Slit) | 0.225 | Loose | 90 | 5 | **80.0 (77.7)** | |
| **6 Fiber Optics slit** Sample A2 (Slit) | 0.193 | Loose | 104 | 0 | **45.0 (44.0)** | |
| **6 Fiber Optics unslit** Sample A2 **Tight Buffer** | 0.193 | Loose | 104 | 0 (1.14) | **30.0 (28.8)** | |
| **2 Fiber Optics** slit Sample B2 **Tight Buffer** | 0.181 | Loose | 111 | 0 | **15.0 (14.8)** | |
| **2 Fiber Optics unslit** Sample B2 Tight Buffer | 0.181 | Loose | 111 | 0 | **35.0 (1) (33.5)** | |
| **6 Fiber Optics slit** Sample C **Loose Tube** | 0.229 | Loose | 88 | 0 | **45.0 (43)** | |
| **6 Fiber Optics unslit** Sample C **Loose Tube** | 0.229 | Loose | 88 | 0 (1.44) | **50.0 (1) (47.7)** | |

As illustrated, few samples of optical fiber 10 were tested under NFPA 255 requirements. Accordingly, the first sample C-1 was loose tube arrangement made with a Smokeguard FP108 loose tube and overall cable jacket, an E-glass strength member was used in this cable. This sample failed the NFPA 255 testing.

It is noted that the NFPA 255, as one of its test procedures, requires that the smoke index of the optical fiber be measured in both slit and unslit arrangement. Thus, samples A, B, and D in the unslit arrangement passed the NFPA 255 testing, while they failed when the cable was slit as illustrated in Table 1. Accordingly, Cable A is a replication of cable C-1 but with the optical fiber count reduced from 6 to 2. Cable B has 6 OF units, the lose tube and jacket are made from Smokeguard FP108 and the strength member is a 12 x 3010 glass fiber. Cable D is the same as cable B but with a 12 x 785 glass strength member.

As illustrated samples, A2, B2 and C passed the NFPA 255 testing in both slit and unslit arrangement, as illustrated in Table 1. Cable A2 is a tight buffer construction with 6 x 900µm optical fiber unit arranged around 3 x 1500 denier aramid fibers. 9 x 1500 denier aramid fibers are arranged around the 6 x optical fiber units. An overall FP108 jacket surrounds these components to form the outer jacket. B2 is tight buffer made to the same constructional detail as A2 but with only 2x 900 µm optical fiber units. Cable C is a loose tube construction with an inner jacket of 0.12 inch OD, 0.020 inch wall thickness and 0.080 inch ID. The inner jacket contains 6 x 250µm optical fiber units and is itself surrounded by 12 x 1500 denier aramid units. The outer jacket of this construction has an OD of 0.225 inches with a 0.022 inch wall thickness. For each cable, A2/B2/C, the inner and outer jacket are made using FP108.

Thus, in accordance with various aspects of the present invention, optical fiber cables have been provided that are Limited Combustible in accordance with NFPA 255 requirements. These fibers can provide substantially improved fire safety characteristics and may be used in plenum areas without the need of sprinkler systems.

## Claims

1. A limited combustible optical fiber comprising:
a plurality of optical fibers in a loose tube arrangement;
a buffer tube jacket made of a flame retardant material;
a strengthening member surrounding said buffer tube jacket made of aromatic polyamide fiber; and
an outer layer jacket surrounding said strengthening member, wherein said buffer tube jacket and said outer layer jacket are formed by a composition including a fluoropolymeric base polymer and a nanoclay additive.

2. The optical fiber in accordance with claim 1, wherein said strengthening member is made of Twaron™

3. The optical fiber in accordance with claim 1, wherein said strengthening member is made of ceramic fiber.

4. The optical fiber in accordance with claim 3, wherein said ceramic member is made of Alumina fiber, Saffil™.

5. The optical fiber in accordance with claim 1, wherein said strengthening member is made of S-glass fibers.

6. The optical fiber in accordance with claim1, wherein said strengthening member is made of an organic based fiber.

7. The optical fiber in accordance with claim 1, wherein said strengthening member is a composition made of alumina Saffil and aramid.

8. The optical fiber in accordance with claim 1, wherein said strengthening member is a composition made of alumina Saffil and Carbon fibers.

9. The optical fiber in accordance with claim 1, wherein said strengthening member is a composition made of alumina Saffil and S-glass fibers.

10. A limited combustible optical fiber comprising:
a plurality of optical fibers in a loose tube arrangement;
a buffer tube jacket made of a flame retardant material;
a strengthening member surrounding said buffer tube jacket made of aromatic polyamide fiber; and
an outer layer jacket surrounding said strengthening member, wherein said buffer tube jacket and said outer layer jacket are formed by a composition including a fluoropolymeric base polymer and a nanoclay additive, such that said limited combustible fiber passes NFPA 255/NFPA 259 testing requirements.

11. The optical fiber in accordance with claim 10, wherein said strengthening member is made of a group consisting of KEVLAR™, and Twaron™.

12. The optical fiber in accordance with claim 10, wherein said strengthening member is made of ceramic fiber.

13. The optical fiber in accordance with claim 12, wherein said ceramic member is made of alumina Saffil™ .

14. The optical fiber in accordance with claim 10, wherein said strengthening member is made of S-glass fibers.

15. The optical fiber in accordance with claim 10, wherein said strengthening member is made of an organic based fiber.

16. The optical fiber in accordance with claim 10, wherein said strengthening member is a composition made of alumina Saffil and aramid.

17. The optical fiber in accordance with claim 10, wherein said strengthening member is a composition made of alumina Saffil and Carbon fibers.

18. The optical fiber in accordance with claim 10, wherein said strengthening member is a composition made of alumina Saffil and S-glass fibers.

19. A limited combustible optical fiber comprising:
a plurality of optical fibers in tight buffer arrangement coated with a flame retardant material;
a strengthening member surrounding said tight buffer arrangement made of aromatic polyamide fiber; and
an outer layer jacket surrounding said strengthening member, wherein said coating for said tight buffer arrangement and said outer layer jacket are formed by a composition including a thermoplastic, non-elastomeric, multi-phase polymer blend comprising a vinylidene fluoride based copolymer and at least one other polymer selected from the group consisting of polyvinylidene fluoride homopolymer and a vinylidene fluoride-based copolymer such that said limited combustible fiber passes NFPA 255/NFPA 259 testing requirements.

20. The optical fiber in accordance with claim 19, wherein said strengthening member is made of a group consiting of either KEVLAR™ and Twaron™.

21. The optical fiber in accordance with claim 19, wherein said strengthening member is made of ceramic fiber.

22. The optical fiber in accordance with claim 21, wherein said ceramic member is made of alumina ,Saffil™ .

23. The optical fiber in accordance with claim 19, wherein said strengthening member is made of S-glass fibers.

24. The optical fiber in accordance with claim19, wherein said strengthening member is made of an organic based fiber.
